Europäisches Patentamt

European Patent Office

Office européen des brevets

(11) Publication number: **0 306 322**
**A1**

## (12) EUROPEAN PATENT APPLICATION

(21) Application number: 88308134.1

(22) Date of filing: 02.09.88

(51) Int. Cl.⁴: **G 01 K 13/08**

(30) Priority: 04.09.87 GB 8720809

(43) Date of publication of application:
08.03.89 Bulletin 89/10

(84) Designated Contracting States:
AT BE CH DE FR GB IT LI LU NL SE

(71) Applicant: THE ELECTRICITY COUNCIL
30 Millbank PO Box 209
London, SW1P 4RD (GB)

(72) Inventor: Wareing, Joseph Brain
Rosewood Cottage
Penyffordd Chester CH4 0EZ (GB)

(74) Representative: Wayte, Dennis Travers et al
BOULT, WADE & TENNANT 27 Furnival Street
London, EC4A 1PQ (GB)

(54) Temperature sensing apparatus.

(57) Temperature sensing apparatus for measuring the temperature of a rotating body such as a rotary induction heating drum (2) utilises light conducting rods or pipes (20) each having one end adjacent an inaccessible position within the drum (2) and the other end at a position outside the drum, energy emerging from the other ends of the rods or pipes (20) being passed to a sensor (22).

FIG. 3    FIG. 2

EP 0 306 322 A1

## Description

### TEMPERATURE SENSING APPARATUS

This invention relates to temperature sensing apparatus, and in particular to such apparatus for sensing the temperature of a moving, and more particularly rotating, body.

It is often required to sense the temperature of a body, for example of a workpiece in an industrial process, and while this can be done relatively easily when the body is stationary, difficulties arise when the body is moving, for example rotating.

In GB-A-2163930 there is described a rotary induction heating kiln comprising a rotating drum in which material to be dried is located, the drum being rotated about a central primary conductor extending axially of the drum and having a double skin outer wall containing a ferromagnetic coil. The outer skin of the drum forms a closed electrically conductive loop about the core. Alternating current set up in the central primary conductor sets up an alternating magnetic flux which is guided by the core, whereby current is induced to flow in the outer skin. Thus, the material in the drum is heated by the energy produced in the outer wall of the drum by the induced current. In order to enhance the contact between the material to be heated and the drum, inwardly directed axially extending fins are provided on the inner skin of the drum wall.

With such a kiln it is generally necessary to know the temperature of the material being heated, and this can be sensed by sensing the temperature of the fins which are in intimate contact with the material.

However, the fins are located within the drum and are not readily accessible to the outside of the drum. Thus, either the temperature of the fins must be sensed within the drum and the result of sensing passed to outside the drum, or the temperature at the fins must be passed to a location on the drum, for example on its outer surface, where the temperature can be sensed.

Sensing the temperature within the drum requires the use of sensing elements capable of withstanding the conditions in the drum, thus involving considerable expanse, complicating construction of the drum, and presenting difficulties if a sensing element should fail and require replacement.

Such a known apparatus comprises thermocouples serving as sensing elements, attached to the fins and electrically connected to slip rings on the axis of rotation of the drum. The slip rings are contacted by metal brushes or contacts and the signals picked up supplied to a temperature control device. This known apparatus has the disadvantages that the slip ring arrangement is expensive and can be electrically noisy.

According to this invention there is provided temperature sensing apparatus for sensing the temperature of a moving body, comprising elongate energy conducting means arranged within the body with one end adjacent an inaccessible position within the body and the other end at a position accessible to outside the body, and a sensor means arranged outside the body, stationary relative thereto, to receive energy from said other end of the energy conducting means.

Preferably the energy conducting means is a light conducting rod or tube which can be made of pyrex, quartz or sapphire in dependence upon the temperature in the body. The sensor means can then be a photosensitive diode which can be positioned to receive energy directly from the energy conducting means or be remotely positioned with the energy being conducted thereto by an optical fibre arrangement.

The apparatus of this invention has the advantages that it is simple to install in a moving body, such as a rotary induction heating kiln, the parts mounted in the body being passive and such as should not require replacement.

This invention will now be described by way of example with reference to the drawings, in which:-

Figure 1 is a diagrammatic perspective view, with part broken away, of a rotary induction heating kiln as described in GB-A-2163930;

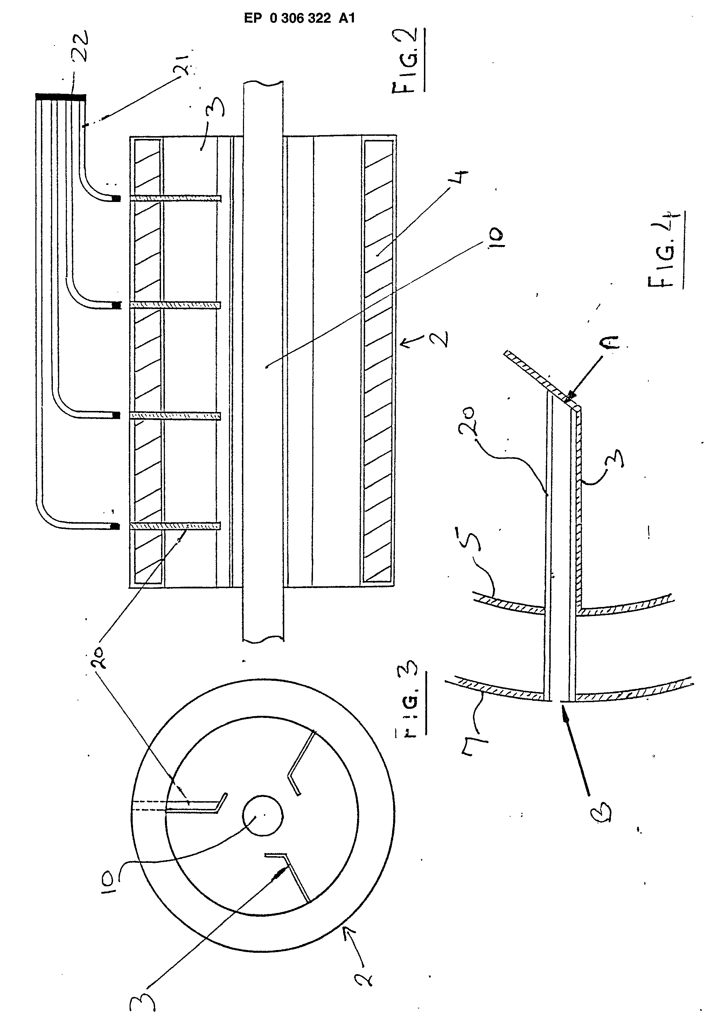

Figure 2 is a longitudinal sectional view through a drum as shown in Figure 1 with apparatus according to this invention;

Figure 3 is an end view of the drum of Figure 2; and

Figure 4 shows a detail of the drum of Figures 2 and 3.

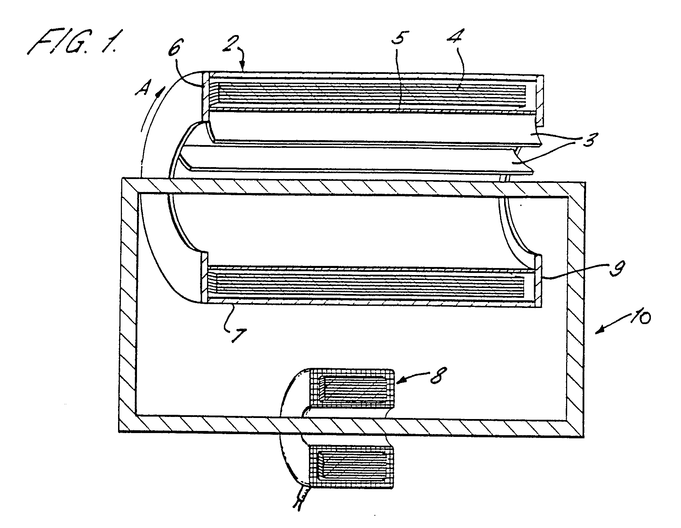

Referring to the drawings, Figure 1 shows a rotary induction heating drum 2 in the form of a right circular cylinder having a double skin outer wall 5 and 7, and end plates 6 and 9. The space between the skins 5 and 7 contains a laminated ferromagnetic core structure 4. The drum 2 is mounted for rotation about a straight arm of a primary loop conductor 10 in which alternating currents are induced by a transformer 8 mounted on another arm of the loop. The inner skin 5 of the drum carries a plurality of inwardly directed, longitudinally extending fins 3.

For use, material to be heated is placed in the drum 2 which is rotated about the conductor 10 while alternating current in the conductor 10 set up by the transformer 8, sets up a magnetic flux which is guided by the core structure 4 whereby current is induced to flow in the outer skin 7 of the drum 2. The material in the drum 2 is thus heated by the energy produced in the outer skin 7 of the drum 2 by the current. The fins 3 are in intimate contact with the material and assist in keeping the material dispersed and in heat transfer to the material.

In order to sense the temperature of the material in the drum 2, a plurality of light pipes 20 of a material capable of withstanding the temperature in the drum, are mounted at spaced positions along one of the fins 3 each pipe 20 having one end A in contact with the fin 3 at a normally inaccessible position in the drum 2, and its other end B exposed at a position on the outer surface of the drum 2 accessible to outside the drum. Each light pipe 20 serves to conduct energy indicative of the temperature at point A, that is the temperature of the material in the drum, to point B.

Mounted outside the drum 2 are a plurality of optical fibre arrangements 21 each having one end directed towards the drum 2 and positioned to receive energy from a respective one of the light pipes 20 once during each rotation of the drum 2. The optical fibre arrangements 21 conduct the received energy to a sensor element 22 comprising a plurality of photosensitive diodes respectively associated with the light pipes 20. Each of the diodes 22 thus provides an output signal indicative of the temperature in the drum 2 at the inner end A of the associated light pipe 20, the output signals from the diodes 22 thus being indicative of the temperature profile along the drum 2. The diodes 22 may be of the silicon or germanium type or a similar device having a short response time of the order of microseconds. This will allow full measurement of the received pulses of radiation, the duration of which will be of the order of tens of milliseconds.

Although in the apparatus described above the sensor element 22 is mounted remote from the drum 2 it will be appreciated that otherwise individual sensor elements can be used each arranged to receive energy directly from the end B of one of the light pipes without any interposed optical fibre arrangement. Otherwise when fibre optic arrangements are used they can all lead to a single sensor element arranged to respond to the energy from each of the light pipes 20 in turn. If an average temperature indication will suffice instead of a temperature profile, then the outputs of the optical fibre arrangements can be commoned and sensed by a single sensor element.

Although in the apparatus described above the ends B of the light pipes 20 are directed radially of and lie in a line axially of the drum 2, it will be appreciated that otherwise the light pipes 20 can be routed within the drum 2 such that their ends B are directed axially at one end of the drum 2. If the ends B are then circumferentially spaced about the end of the drum 2, then by use of a single sensor element the energy from the light pipes 20 can be received sequentially for further processing to give a temperature profile indication.

A similar output can be obtained by directing the ends B of the light pipes 20 radially of, and in a circumferential ring about, the drum 2.

It will be appreciated that if only a simple temperature indication is required, then only a single light pipe 20 and associated sensor element 22 need be provided.

## Claims

1. Temperature sensing apparatus for sensing the temperature of a moving body (2), characterised by elongate energy conducting means (20) arranged within the body (2) with one end adjacent an inaccessible position within the body (2) and the other end at a position accessible to outside the body (2), and a sensor means (22) arranged outside the body (2), stationary relative thereto, to receive energy from said other end of the energy conducting means (20).

2. Apparatus as claimed in Claim 1, characterised in that the energy conducting means (20) is a light conducting rod or tube.

3. Apparatus as claimed in Claim 2, characterised in that said sensor means (22) is a photosensitive diode.

4. Apparatus as claimed in Claim 2 or Claim 3, characterised in that energy is conducted from said other end of the energy conducting means (20) to the sensor element (22) by way of an optical fibre arrangement (21).

5. Apparatus as claimed in any preceding claim, characterised by a plurality of said energy conducting means (20) and associated sensor elements (22) arranged to sense the temperature at a respective plurality of spaced positions in the body (2).

FIG. 1.

EP 0 306 322 A1

FIG. 2

FIG. 3

FIG. 4

European Patent Office

**EUROPEAN SEARCH REPORT**

Application Number

EP 88 30 8134

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CONTROL ENGINEERING, vol. 23, no. 10, October 1976, page 25; "Control devices and systems"<br>* Whole article *<br>--- | 1,4 | G 01 K 13/08 |
| A | US-A-3 345 873 (O.G. LELLEP)<br>* Column 3, line 60 - column 4, line 18; figures *<br>--- | 1 | |
| A | US-A-3 331 247 (H. TOEPELL)<br>* Column 6, lines 13-60; figures *<br>--- | 1 | |
| A | DE-A-2 357 409 (NIPPON KOKAN)<br>* Page 8, claim 1; figures *<br>--- | 1,5 | |
| A | DE-A-2 852 679 (BOSCH)<br>* Page 8, paragraph 3 - page 12, paragraph 1; figures 1-3 *<br>----- | 1,3 | |
| | | | TECHNICAL FIELDS SEARCHED (Int. Cl.4)<br><br>G 01 K |

The present search report has been drawn up for all claims

| Place of search | Date of completion of the search | Examiner |
|---|---|---|
| THE HAGUE | 10-12-1988 | RAMBOER P. |

EPO FORM 1503 03.82 (P0401)